# EUROPÄISCHE PATENTSCHRIFT

(11) **EP 3 492 653 B1**
(45) Veröffentlichungstag und Bekanntmachung des Hinweises auf die Patenterteilung: **12.01.2022**
(21) Anmeldenummer: 18000873.2
(22) Anmeldetag: 06.11.2018
(51) Int. Cl.: D21H 21/02, D21H 21/36, C02F 5/10, C02F 1/76

(54) **REINIGUNGSZUSAMMENSETZUNG FÜR MIT WASSER IN KONTAKT STEHENDE ANLAGEN**
ONLINE CLEANER FOR WATER-BEARING SYSTEMS OR SYSTEMS WHICH COME INTO CONTACT WITH WATER
NETTOYANT EN LIGNE POUR INSTALLATION D'ACHEMINEMENT D'EAU OU EN CONTACT AVEC DE L'EAU

(30) Priorität: 30.11.2017 DE 102017011116
(43) Veröffentlichungstag der Anmeldung: 05.06.2019
(73) Patentinhaber: Pohlen, Alfred, 8315 Olm (LU); Kern, Gerd, 7201 Neudörfl (AT)
(72) Erfinder: Pohlen, Alfred, 8315 Olm (LU); Kern, Gerhard, 7201 Neudörfl (AT); Spedding, Jeffrey Frank, Southampton, S045 1AD (GB)
(74) Vertreter: Grape & Schwarzensteiner

(56) Entgegenhaltungen:
- WO-A1-2018/109273
- US-A1- 2007 093 404

## Beschreibung

Die vorliegende Erfindung betrifft einen Online-Reiniger und ein Verfahren zur Beseitigung, Vermeidung oder wenigstens Verminderung von Ablagerungen in wasserführenden und/oder mit Wasser in Kontakt stehenden papierproduzierenden Anlagen.

Im Rahmen der vorliegenden Erfindung bedeutet der Begriff "wasserführende und/oder mit Wasser in Kontakt stehende Anlage" jegliche Anlage, Maschine oder Apparatur, welche während des Betriebes Wasser führt oder mit Wasser in Kontakt kommt, beispielsweise, jedoch nicht beschränkt auf, Wärmetauscher, Kühltürme, Boiler, Abwasserbehandlungsanlagen und nicht zuletzt Papiermaschinen. Unter Papiermaschinen sind solche Maschinen zu verstehen, in denen generell Papier, aber auch Tissue-Papiere und sonstige Spezialpapiere sowie Pappen und Kartonagen produziert werden, auch zur Verwendung mit Lebensmitteln.

Ablagerungen, welche sich in solchen Anlagen bilden, verursachen verschiedenste Probleme. So wird beispielsweise eine Kalkbildung auf den Oberflächen von Wärmetauschern, die Wirksamkeit der Wärmeübertragung reduzieren. In einer Kühlturmanlage können Ablagerungen zu einer mechanischen Betriebsstörung der Kühloberflächen führen. Kalkablagerungen führen im Übrigen in allen anderen denkbaren Anlagen zu einer Gebrauchsbeeinträchtigung, so auch in Papiermaschinen.

Repräsentativ für alle wasserführenden und/oder mit Wasser in Kontakt stehenden Anlagen wird in der vorliegenden Anmeldung hauptsächlich eine Papiermaschinenanwendung beschrieben.

Während der Papierherstellung wird in einem kontinuierlichen Prozess eine Papierbahn gebildet, gepresst und thermisch getrocknet. Diese drei Schritte der Papierherstellung finden in der sogenannten Siebpartie, der Pressenpartie und Trockenpartie einer Papiermaschine statt. In allen drei Abschnitten und im Prozesswasser selbst können sich störende organische und anorganische Ablagerungen bilden, welche beseitigt verhindert oder zumindest reduziert werden müssen, um Unterbrechungen im Maschinenlauf und/oder ein Reißen der Papierbahn zu beschränken. Dazu sind, unter anderem, Defekte, Löcher sowie Flecken im Papier unerwünscht.

Im Stand der Technik sind verschiedene Maßnahmen und Produkte zur Beseitigung, Vermeidung oder wenigstens Verhinderung von Ablagerungen in Papiermaschinen beschrieben und die diesen Maßnahmen zugrundeliegenden Probleme erörtert.

In der EP 0 517 360 wird die Zugabe eines Kohlenwasserstofflösungsmittels zusammen mit wenigstens einem Tensid zur Pulpe einer Papierherstellungsanlage offenbart, welche Sekundärfasern verwendet, die Verunreinigungen mit Heißkleber oder Haftkleber enthalten.

In der EP 0 731 776 wird offenbart, dass eine Öl-in-Wasser-Emulsion, welche organische Lösungsmittel und Tenside enthält, einem wässrigen System, das Feststoffe transportiert, zugegeben werden kann, beispielsweise bei einem Papierherstellungsverfahren, um Schleimbildung zu verhindern und mikrobiologisches Wachstum zu reduzieren.

Gemäß der EP 0 496 905 werden Lignosulfonate zur Ablagerungskontrolle verwendet. Damit wird das Wachstum von Mikroben beeinflusst, so dass die Wachstumsrate sessiler bzw. Schleim bildender Mikroorganismen reduziert wird und somit nichtsessile Mikroorganismen vorherrschen können.

Die US-PS 3,151,020 beschreibt ein Verfahren zur Verhinderung und Kontrolle von Mikroorganismen in industriellen Prozesswasseranlagen. Unter anderem wird dort die Verwendung eines aliphatischen Kohlenwasserstoffs in Verbindung mit einem Emulgiermittel und einem polyhalogenierten Alkylester vorgeschlagen.

Die EP 1 556 547 B1 der Anmelderin schlägt zur Ablagerungsbekämpfung in industriellen Wasserkreisläufen den Einsatz von entaromatisiertem White Spirit in Kombination mit einem Tensid und Orangen Terpen vor. Dieses Reinigungsmittel wird auf die Pressenfilze aufgebracht, um die Filze sauber zu halten und die Entwässerung des nassen Papiergeleges zu verbessern.

Die US 2007/0093404 A1 beschreibt eine Reinigungszusammensetzung für harte Oberflächen, welche einen dibasischen Ester als ein erstes Lösungsmittel in Kombination mit einem ersten Emulgiermittel, einem kurzkettigen Co-Tensid und einem zweiten Emulgiermittel sowie Wasser zur Reinigung von Öfen in Einsatz bringt.

In der WO 2018/109273 A1 ist eine Reinigungszusammensetzung zum Reinigen von Anlagen beschrieben, welche einen oder mehrere Fettsäuremethylester, vorzugsweise Pflanzenölmethylester, bevorzugter Sojabohnenölmethylester, ein oder mehrere Alkencarbonate, vorzugsweise Propylencarbonat, ein oder mehrere Tenside, vorzugsweise nicht-ionische Tenside sowie ein oder mehrere Glycolether und/oder dibasische Ester enthaltende Lösungsmittel umfasst.

Bei den bekannten Verfahren sind nach heutigen Gesichtspunkten und Bewertungsgrundlagen nicht alle zur Ablagerungsbekämpfung vorgeschlagenen und eingesetzten Komponenten aus biologischer und toxischer Sicht unbedenklich. Das gilt insbesondere für den Einsatz aromatischer und aliphatischer Kohlenwasserstoffe. So entstand in der Papierindustrie, aber insbesondere in der Verpackungsindustrie, und hier jener für Lebensmittel, welche hauptsächlich braunes Papier und braune Kartonagen produziert, eine Ablehnung gegen Produkte zur Ablagerungsbekämpfung, welche auf bestimmten Mineralölfraktionen, so auch White Spirit, basieren. Obwohl beispielsweise der von der Anmelderin eingesetzt White Spirit technisch biologisch abbaubar ist, gilt das nicht für andere Mitglieder dieser Familie.

Es hat sich herausgestellt, dass ein einfaches Weglassen oder der simple Ersatz durch andere, als nicht-toxisch eingestufte Lösungsmittel, nicht zwangsläufig ein für die Ablagerungsbekämpfung in insbesondere Papiermaschinen geeignetes Produkt liefert. Es musste ein neues Produkt mit zumindest gleich guten Eigenschaften aus Komponenten mit vernachlässigbarer Toxizität entwickelt und zur Verfügung gestellt werden.

Gegenstand der vorliegenden Erfindung ist nun ein Online-Reiniger für die Beseitigung, Vermeidung oder wenigstens Verminderung von Ablagerungen in wasserführenden und/oder mit Wasser in Kontakt stehenden, papierproduzierenden Anlagen, welcher frei von aliphatischen KohlenwasserstoffLösungsmitteln ist und aus wenigstens einem hydrophoben organischen Lösungsmittel aus der Gruppe der Acetale sowie aus wenigstens einem Tensid, und/oder wenigstens einem Chelatbildner sowie > 40% Wasser besteht.

Der Chelatbildner kann als Lösungsmittel bzw. Lösungsvermittler und/oder Komplexiermittel wirken.

Von der Anmelderin durchgeführte Tests haben ergeben, dass Produktzusammensetzungen auf Basis der vorgenannten Komponenten unerwartet positive Ergebnisse liefern, was deren Reinigungskraft und Beseitigung und/oder Verhinderung von Ablagerungen anorganischen und/oder organischen Ursprungs betrifft. Diese unerwartet positiven Eigenschaften werden weiter unten näher beschrieben.

Bevorzugte Ausführungsformen des erfindungsgemäßen Produkts ergeben sich aus den Unteransprüchen 2 bis 10.

So können im Rahmen der vorliegenden Erfindung Acetale, mit einem hohen Siedepunkt von > 160 °C und einem hohen Flammpunkt von > 60 °C ("closed cup; z.B. Pensky-Martens) geeignete Lösungsmittel sein. Bevorzugte Acetale sind dabei, jedoch ohne jede Beschränkung darauf, 2-Ethylhexylal und/oder Dibutoxymethan
Die im Rahmen der vorliegenden Erfindung als Lösungsmittel zu betrachtenden Acetale haben geeignet hohe Siede- und Flammpunkte, sind biologisch abbaubar und sind auch nicht toxisch. Sie können daher bedenkenlos als Komponente für Produkte eingesetzt werden, die zum Abbau und/oder zur Verhinderung von Ablagerungen anorganischen und/oder organischen Ursprungs in wasserführenden Anlagen verwendet werden. Überraschender Weise ergab der Ersatz der bisher eingesetzten aliphatischen Kohlenwasserstoffe durch diese Lösungsmittel nicht nur eine gleich gute sondern synergistisch verbesserte Wirkung der Produkte.

Das Tensid kann aus der großen Gruppe der Alkylbenzolsulfonate, Alkoholaminsalze, Alkylsulfonsuccinate und/oder aliphatischen Alkoholalkoxylate ausgewählt werden. Vorzugsweise ist an Isopropanolamindodecylbenzolsulfonat, Natrium-di-(2-ethylhexyl)-sulfonbernsteinsäure und/oder aliphatische C₁₂-C₁₄-Alkoholethoxylate zu denken.

Jedes dieser Tenside kann die Reinigungswirkung und Effektivität bezüglich einer Ablagerungsverhinderung alleine unterstützen. Es hat sich jedoch gezeigt, dass eine Kombination aus zwei Tensiden, wovon eines ein anionisches, und das andere ein nicht-ionisches Tensid ist, die bestmögliche Wirkung erzielt. Diese Kombination wird in den erfindungsgemäßen Produkten bevorzugt. Das anionische Tensid wirkt dabei als Benetzungsmittel, das nicht-ionische Tensid als Detergenz bzw. Emulgiermittel. Ein eine solche Tensidkombination enthaltendes Produkt ist in der Lage, Oberflächen und darauf haftende Ablagerungen zu benetzen und die öligen und fettigen Bestandteile zu emulgieren, sodass die Ablagerungen von den Oberflächen in wässrige Dispersion gebracht werden.

Wahlweise kann ein Produkt gemäß der vorliegenden Erfindung zur Beseitigung, Vermeidung oder wenigstens Verminderung von Ablagerungen in wasserführenden und/oder mit Wasser in Kontakt stehenden Anlagen einen ein- und/oder zwei- bis vierarmige Komplexbildner enthalten. Aufgabe des Komplexbildners ist dabei vordergründig die Komplexierung von Metallionen aus Metallsalzen, wie beispielsweise Calcium oder Magnesium, um unter anderem deren negative Wirkung auf die Tenside zu unterbinden. Als Komplexierungsmittel, respektive Chelatbildner sind im Rahmen der vorliegenden Erfindung Gluconate, L-Glutaminsäure-N,N-diacetat und sogar Gluconsäure selbst zu verstehen. Sie bewirken eine Wasserenthärtung und können so die Leistungsfähigkeit der eingesetzten Tenside verbessern und wirken teilweise selbst als Lösungsmittel.

Vorzugsweise umfasst ein erfindungsgemäßes Produkt zur Beseitigung, Vermeidung oder wenigstens Verminderung von Ablagerungen in wasserführenden und/oder mit Wasser in Kontakt stehenden Anlagen, Dodecylbenzolsulfonsäure, C13-C15-Alkoholalkoxylat,Dibutoxymethan und N,N-Bis(carboxylatomethyl)-L-glutamat-tetranatriumsalz (Produkt OLC-1).

Von diesem Produkt gibt es eine saure Variante, welche Glycolsäure enthält und für bestimmte Anwendungsfälle ebenfalls wirksam ist (Produkt OLC-2).

Die erfindungsgemäßen Zusammensetzungen OLC-1 und OLC-2 umfassen eine Mikroemulsion eines biologisch abbaubaren und nichttoxischen Lösungsmittels (Butylal) in Wasser. Die oberflächenaktiven Stoffe, welche ursprünglich zur Stabilisierung der Emulsion eingesetzt sind, haben sich auch als gute Reinigungstenside erwiesen. Das eine Tensid davon ist ein gutes Benetzungsmittel, das andere Tensid besitzt gute Emulgiereigenschaften. Der zur Stabilisierung der Emulsion eingesetzte Komplexbildner verbessert auch die Reinigungsleistung der Tenside.

Ein anderes ebenfalls bevorzugtes Produkt zur Beseitigung, Vermeidung oder wenigstens Verminderung von Ablagerungen in wasserführenden und/oder mit Wasser in Kontakt stehenden Anlagen, umfasst Natriumgluconat, Natrium-2-ethyloxylsulfat und einen (C9-C16) Alkylpolyethylenglycolether (Produkt OLC-3).

Diese Zusammensetzung OLC-3 umfasst zwei Arten von Tensiden, plus einen Komplexbildner, wobei der Komplexbildner biologisch abbaubar und nicht-toxisch ist.

Bei den von der Anmelderin durchgeführten Tests hat sich gezeigt, dass eine Kombination der Produkte OLC-3 mit einem Produkt OLC-1, respektive OLC-2 zur Beseitigung, Vermeidung oder wenigstens Verminderung von Ablagerungen in wasserführenden und/oder mit Wasser in Kontakt stehenden Anlagen besonders effektiv ist (Produkt OLC-6).

Hierbei handelt es sich um einen neuen, neutralen, auf Wasser basierenden Reiniger, umfassend Wasser, Tenside, Butylal, Natriumgluconat und GLDA. Es handelt sich im Wesentlichen um eine Mischung der Produkt OLC-1, respektive OLC-2 mit einem Produkt OLC-3.

Die Produkte gemäß der vorliegenden Erfindung liegen (zum Teil) in einer stabilen wässrigen Mikroemulsion oder Lösung vor, was ihre Lagerfähigkeit ermöglicht und den gezielten Einsatz in Bezug auf Ort und Menge der Dosierung in ein wasserführendes System erleichtert.

Gegenstand der vorliegenden Erfindung ist auch ein Verfahren zur Beseitigung, Vermeidung oder wenigstens Verminderung von Ablagerungen in wasserführenden und/oder mit Wasser in Kontakt stehenden Anlagen, insbesondere Industrieanlagen, wobei dem Prozesswasser für die oder in den Anlagen an ausgewählten Abschnitten ein erfindungsgemäßes Produkt in einer basierend auf dem Trockengewicht der in dem Wasservolumen der Anlage vorliegenden Feststoffe wirksamen Menge zugegeben wird.

Bevorzugte Ausführungsformen dazu ergeben sich aus den Unteransprüchen 12 bis 17.

So wird das Produkt in geeigneter Weise im Bereich von Formationssieben, Aufnahmefilzen, Pressenfilzen, Saugwalzen, Trockensieben, Leitwalzen oder Trockenzylindern der Trockenpartien, den Stoffaufbereitungskreisläufen, dem Siebwasserkreislauf in der Formationspartie (sogenanntes Siebwasser I), dem Siebwasserkreislauf in der Pressenpartie, sowie dem nachfolgendem Siebwasserkreislauf in der Faserrückgewinnungsanlage, den Kreisläufen und/oder Teilen einer Pulpe-Entwässerungsmaschine einer Papier- oder Pappe erzeugenden Maschine aufgegeben.

Das oder die Produkt (e), respektive das oder die Additiv (e) können direkt oder indirekt in einer Gesamtmenge von 50 bis 1000 ppm (g/Tonne) aufgegeben werden. Demzufolge werden der Papiermaschine erfindungsgemäß so wenig wie 50 ppm bis 1000 ppm des Produkts zugegeben. 50 ppm bedeuten lediglich 50 g Produkt pro Tonne produzierten Papiers. Die Papiermaschinen-Bespannungen (Formationssiebe, Pressenfilze, Trockensiebe) werden durch Aufbringen des Produkts mittels eines über der Breite der Formationssiebe, Pressenfilze, Trockensiebe fixierten Sprüharms, alternativ für die Trockensiebe mittels eines traversierenden Sprüharms behandelt. Erfindungsgemäß werden nur 2 bis 10 ml Produkt pro Meter Breite der Bespannung und pro Minute zudosiert. Dabei ist die Menge pro Tonne aus dem tatsächlichen Querschnitt der Papiermaschine und der Papierproduktion zu berechnen. Das Produkt kann üblicherweise kontinuierlich und in verdünnter oder unverdünnter Form zugegeben werden.

Diese Mengenangabe beinhaltet nicht die Menge eines stabilisierten Halogens, das erfindungsgemäß optional zugegeben werden kann.

Das stabilisierte Halogen kann in üblicher Weise ein von Hypochlorit und Ammoniumchlorid, von einer Chlorquelle und Ammoniumsulfat, von Hypochlorit und Ammoniumcarbamat, von einer Chlorquelle und Ammoniak hergeleitetes Monochloramin, von Hypochlorit und Ammoniumbromid hergeleitetes Bromid-aktiviertes Monochloramin (BAC), oder Brom-chlordimethylhydantoin (BCDMH), aktives Brom aus Bromchlorid, Natrium-Dichlorisocyanurat-dihydrat oder Trichlorisocyanursäure sein. Monochloramin wird besonders bevorzugt.

Das stabilisierte Halogen kann als Einmaldosis oder kontinuierlich zugegebene Lösung zusätzlich in einer Menge von 10 bis 10.000 ppm, vorzugsweise 250 bis 2000 ppm, ausgedrückt als handelsübliche 13% Cl₂ (Gew./Vol.) Natriumhypochloritbleiche, basierend auf dem Trockengewicht von Feststoffen, welche in dem Wasservolumen der Anlage vorhanden sind, direkt oder indirekt zugegeben werden.

Theoretisch könnte das stabilisierte Halogen auch in-situ durch separates Einbringen der es bildenden Komponenten in den Kreislauf erzeugt werden.

Als Maßeinheiten werden folglich g/t, also Gramm Produkt pro Tonne Papier oder ml/t, also Milliliter pro Tonne Papier verwendet.

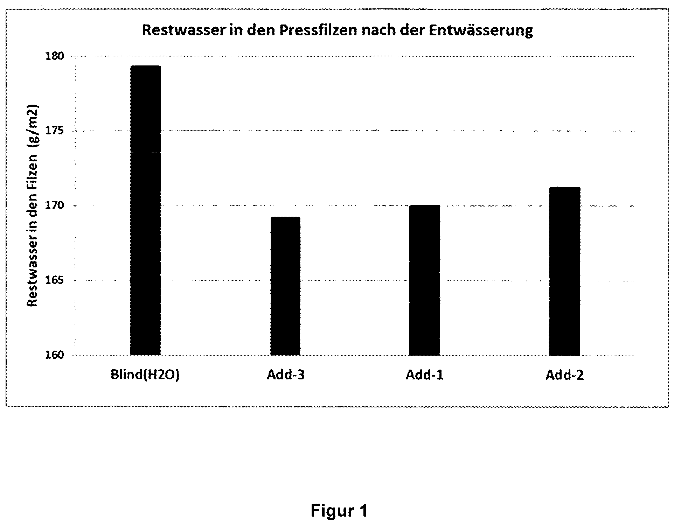

Nachfolgend wird anhand von Beispielen und Vergleichsdaten die hervorragende und verbesserte Wirkung der erfindungsgemäßen Produktzusammensetzungen bei der Beseitigung, Vermeidung oder wenigstens Verminderung von Ablagerungen in einer Papiermaschine gezeigt. Ergebnisse sind in den Diagrammen der Fig. 1 bis 4 grafisch dargestellt.

### Grundlage für durchgeführte Tests

a) Nach der Ausbildung der Papierbahn in der Formationspartie einer Papiermaschine (in diesem Fall durch Entwässerung der verdünnten Papierpulpe über einem kontinuierlichen Band eines Kunststoffsiebes, genannt Formationssieb), enthält die nasse Papierbahn etwa 20% Papierfeststoffe und daher etwa 80% Wasser. Die nasse Papierbahn wird in eine Pressenpartie eingeführt, wo sie in üblicher Weise auf einem kontinuierlichen Pressenfilzband abgelegt wird. Dieses Band wird dann in einen Spalt zwischen zwei Walzen eingeführt, die einen Druck auf das Papier-Filz-"Sandwich" ausüben. Etwas Wasser wird aus dem nassen Papier in den Filz absorbiert. Die teilweise getrocknete Papierbahn wird von diesem Filz getrennt und in üblicher Weise in Kontakt mit einer weiteren kontinuierlichen Filzbahn gebracht und des Weiteren in einen weiteren Spalt zwischen zwei Walzen. Dieses Verfahren wird im Allgemeinen ein drittes Mal wiederholt.
   Die Filze, welche jeweils Wasser aus der Papierbahn absorbiert haben, werden ein jeder über eine Vakuumbox geführt, wo so viel wie möglich Wasser aus den Filzen gezogen wird. Die Filze wandern über ein Walzensystem, wobei sie noch einmal nasse Papierbahnen zum Pressen aufnehmen. Je mehr Wasser durch das Vakuumsystem aus den Filzen extrahiert wird, desto mehr Wasser kann nachfolgend aus der nassen Papierbahn in die Pressenfilze im nächsten Schritt aufgenommen werden.
   Sind die Pressenfilze übermäßig verschmutzt und ist die offene Porenstruktur der Filze verstopft, kann weniger Wasser durch die Filze aus der nassen Papierbahn in den Pressenspalten durch die Filze absorbiert werden. Wenn die Filze durch Kontaminierung mit hydrophoben organischen Substanzen, wie Rückständen aus Klebstoffen aus verwendetem Altpapier, kontaminiert werden, kann ebenfalls weniger Wasser durch die Filze absorbiert werden. Normalerweise werden diese Kontaminierungen mittels eines auf den (nassen) Filz direkt vor der Vakuumbox gerichteten, oszillierenden Hochdruckstrahls (Hochdruckdusche) eliminiert und mit dem Wasser in ein direkt anschließendes Vakuumsystem gezogen.
   Das aus den Filzen gezogene Wasser wird dann Teil vom sogenannten Siebwasser II und wird teilweise in das Papiermaschinenprozesswasser zur weiteren Verarbeitung zurückgeführt. Es können wenigstens drei solche Pressenfilze und Pressenspalte in einer typischen Pressenpartie vorhanden sein, in denen das Papier gegen Filze gedrückt wird, bevor es schließlich mit nur etwa 50% Wasser in die Trockenpartie eingeführt wird, worin das nasse Papier über mit heißem Dampf beheizte Zylinder weiter getrocknet wird.
   Die Wirksamkeit der Pressenpartie und des Vakuumsystems zur Entfernung von Wasser aus dem Papier und den Pressenfilzen ist von großer Wichtigkeit, da Wasser, das in die Trockenpartie eintritt, Kosten zum Trocknen verursacht und den Papierherstellungsprozess verlangsamt. Das Trocknen des nassen Papiers ist der kostenintensivste und der die Geschwindigkeit der Papierherstellung am stärksten beschränkende Faktor.
b) Die aus dem Stoffauflauf auf das Formationssieb fließende Papierpulpe wird typischerweise 1% oder weniger Fasern und andere Papierfeststoffe (z.B. Füllstoffe) dispergiert in Wasser aufweisen. Wasser fließt natürlich durch das Sieb unter Zurücklassung der meisten Papierfeststoffe auf der Oberfläche des Siebes. Das durch das Sieb infolge der Schwerkraft abtropfende Wasser, oder Wasser, das mit Hilfe von sogenannten "Foils" (abgewinkelte Keramikblätter) von der Unterseite des Siebes zusätzlich abgezogen wird, ist als Siebwasser I bekannt. Das Siebwasser I fällt in eine Sammelpfanne und dann in ein Siebwasser I-Silo. Dieses Wasser, das nun vielleicht 0,2% Restfeststoffe (zumeist Füllstoffe) enthält, wird in den sogenannten "kurzen Kreislauf" gepumpt, wobei in die Einlassseite der Hauptzentrifugalpumpe (z.B. eine sogenannte Mischpumpe) ein Strom neuen Papiervorratkonzentrats (sogenannter Dickstoff) mit etwa 4% Feststoffen aus der "Maschinenbütte" eingespeist wird. Nach der Zugabe der geeigneten Menge an Dickstoff nennt sich das Siebwasser I "Dünnstoff" und weist wieder 1% oder weniger Konsistenz auf. Dieser "Dünnstoff" wird häufig durch eine Reihe von Zentrifugalreinigereinheiten gepumpt, welche schwere oder leichte teilchenförmige Kontaminierungen zentrifugal entfernen und werden auch über eine Luftentfernungseinheit (z.B. Dekulator) fließen und schließlich über einen speziellen drehbaren Siebfilter (z.B. ein Vertikalsortierer oder Drucksortierer), um alle unerwünschten großen Teile oder Faserklumpen zu entfernen. Aus dieser Einheit fließt die gereinigte Papierfaseraufschlämmung zum Stoffauflauf und auf das Formationssieb. Nach dem letzten Drucksieb ist keine weitere Entfernung von Verunreinigungen möglich, bis der Vorrat auf das Formationssieb fließt. Das alles bildet den kurzen Kreislauf und daher fließt der Großteil des vorhandenen Wassers in diesem herum, wobei mehr Prozesswasser in den kurzen Kreislauf eintritt als Wasser in dem Dickstoff enthalten ist und Wasser verlässt den kurzen Kreislauf als Wasser in der nassen Papierbahn, welche über die Siebpartievakuumboxen und in die Pressenpartie fließt.
   Es ist sehr wichtig, dass der letzte Teil des kurzen Kreislaufs, insbesondere nach dem letzten Drucksortierern zum und enthaltend den Stoffauflauf, sehr sauber bleibt und frei von verunreinigenden Ablagerungen und insbesondere frei von biologischem Schleim oder Kombinationen davon ist.
   Dazu werden üblicherweise Schockdosierungen mit Bioziden in dem kurzen Kreislauf verwendet, um das Wachstum von unerwünschtem biologischem Schleim oder Biofilm zu reduzieren. Biozide herkömmlicher Art und/oder vom oxidierenden Typ können jedoch chemische Ablagerungen, z.B. aus Klebstoffen (Stickies) oder aus anorganischen Substanzen nicht immer in ausreichendem Maß verhindern. Häufig werden Zusammensetzungen mit dispergierenden Eigenschaften in dem kurzen Kreislauf verwendet, um die Bildung von Ablagerungen zu kontrollieren. Solche dispergierenden Zusammensetzungen werden üblicherweise kontinuierlich zudosiert und können auch einfach als Online-Reiniger definiert werden.
   Von Vakuumboxen am Ende der Formationssiebpartie und von Saugwalzen an der Stelle, wo die nasse Papierbahn das Formationssieb verlässt entferntes Prozesswasser, ist als Siebwasser II bekannt. Mehr aus der Pressenpartie über die Vakuumkästen entferntes Wasser wird in einer gemeinsamen Bütte gesammelt und wird auch Teil des Siebwassers II. Dieses Prozesswasser kann infolge der Stärke des verwendeten Vakuums höhere Feststoffgehalte als Siebwasser I enthalten. Siebwasser II wird gewöhnlich in eine Faserrückgewinnungseinheit eingespeist, wie einen Scheibenfilter oder eine Strömungseinheit mit gelöster Luft. Das Filtratwasser aus einer solchen Einheit bleibt in 3 Qualitäten zurück, einem supergeklärten Filtrat, einem geklärten Filtrat und einem trüben Filtrat. Zurückgewonnene Faser wird in die Stoffaufbereitung zurückgeführt. Super geklärtes Filtrat kann für Spritzrohre zur Reinigung etc. verwendet werden. Ein Teil des super geklärten Filtrates wird gewöhnlich auch in die Abwasserbehandlungsanlage geschickt, da es im Allgemeinen frei von suspendierten Feststoffen ist. Geklärtes Filtrat kann zur Stoffaufbereitung verwendet werden und trübes Filtrat wird häufig zur Einstellung der Konsistenz (Feststoffgehalt) des Dickstoffes verwendet. Die Siebwasser II-Kreisläufe, Stoffaufbereitungskreisläufe und weitere sekundäre Kreisläufe, werden manchmal ihre eigene Bioziddosis erhalten, werden aber gewöhnlich nicht mit Dispergiertmitteln behandelt.
   Da die meisten Biozide und Reinigungszusammensetzungen ihre Eigenschaften zumindest für eine bestimmte Zeit beibehalten, ist es üblich, solche Behandlungszusammensetzungen in den kurzen Kreislauf zu dosieren und man erwartet dass eine Restfunktionalität bis hinüber in die längeren Stoffaufbereitungskreisläufe anhält. Manchmal werden geklärte Filtrate mit Biozid behandelt, um die Stoffaufbereitungsbereiche zu behandeln.

Die folgenden Parameter werden zur Beurteilung der Leistung der Ablagerungskontrollbehandlung in Papiermaschinenkreisläufen verwendet:
a) Die Anzahl von Flecken, Punkten und Löchern, welche durch kontaminierende Ablagerungen, die sich von den Oberflächen lösen und in das Papier gelangen, wodurch Qualitätsdefekte verursacht werden.
b) Die Anzahl der Brüche (Abrisse) in der Papierbahn, welche Unterbrechungen und Produktionsverluste verursachen. Solche Unterbrechungen können durch Ablagerungsklumpen in der nassen Papierbahn oder die Formationssiebe oder Pressfilze zusetzen, verursacht.
c) Das Erfordernis, die Papiermaschine häufiger und insbesondere häufiger als während fest geplanter Schließungen. Eine Maschine benötigt periodische Unterbrechungen zur mechanischen Wartung und es ist praktisch, eine Maschine gleichzeitig zu reinigen. Wenn zusätzliche Reinigungsunterbrechungen infolge unerwünschter kontaminierender Ablagerungen erforderlich sind, resultiert das in einem Produktionsverlust.

Die Wirksamkeit der erfindungsgemäßen Zusammensetzungen wird anhand des nachfolgenden Beispiels im Vergleich zu bisher bekannten, herkömmlichen Produkten gezeigt.

### 1. Wasserretention in Pressenfilzen

Es wurde ein Stück gebrauchter und daher verschmutzter Filz aus einer Büropapier erzeugenden Papiermaschine entnommen. Es wurden 5x5 cm große Stücke herausgeschnitten. In jedem Test wurden zwei Stücke verwendet, um doppelte Ergebnisse zu erhalten.

Die Filzstücke wurden markiert, genau gewogen und dann zur Konditionierung 1 Stunde in Leitungswasser getränkt.

Die Filzstücke wurden aus dem Wasser genommen, mit einer Ecke nach unten gehalten abtropfen gelassen, bis keine Tropfen mehr abgefallen sind (etwa 10 Sekunden) und dann sofort erneut gewogen. Die Menge an zurückgehaltenem Wasser wurde mit 40 multipliziert, um zurückgehaltenes Wasser pro Quadratmeter auszudrücken.

Drei verschiedene Reinigungszusammensetzungen wurden in einer Menge von 100 ppm (=100µl) in 1000 ml Leitungswasser verdünnt.

Die Filzstücke wurden in dem behandelten Wasser 5 Minuten getränkt, für etwa 10 Sekunden abtropfen gelassen und für die Wasserblindwerte pro Fläche erneut gewogen.
- Additiv 1:: Eine kommerzielle Zusammensetzung (APICLEAN OR-N-02), wie sie in der EP 1 556 547 B1 beschrieben ist, umfassend einen mit Wasserstoff behandelten Kohlenwasserstoff (etwa 97%) und eine Mischung von Tensiden (etwa 3%).
- Additiv 2:: Eine weitere kommerzielle Zusammensetzung (APICLEAN OR-N-0-3), wie sie in der EP 1 556 547 B1 beschrieben ist, umfassend einen mit Wasserstoff behandelten Kohlenwasserstoff (etwa 77%), Orangen Terpen (etwa 20%) und eine Mischung von Tensiden (etwa 3%).
- Additiv 3:: Eine neue Zusammensetzung OLC-1 gemäß der Erfindung, wie sie oben definiert ist.

### Ergebnisse:

Alle Werte sind Gewichtsangaben in Gramm, es sei denn in %.

| Filzproben | (H₂O) pur | Add3 | Add-1 | Add-2 |
|---|---|---|---|---|
| Filz 1 Trockengewicht | 4,0563 | 4,0623 | 3,9749 | 4,0302 |
| Filz 2 Trockengewicht | 3,8753 | 4,0441 | 4,0091 | 4,0165 |
| Filz 1 Gew. nach Drainage | 8,6218 | 8,395 | 8,3095 | 8,4427 |
| Filz 2 Gew. nach Drainage | 8,2737 | 8,1688 | 8,1729 | 8,1639 |
| Filz 1 retentiertes H₂O | 4,5655 | 4,3327 | 4,3346 | 4,4125 |
| Filz 2 retentiertes H₂O | 4,3984 | 4,1247 | 4,1638 | 4,1474 |
| Durchschnitt | 4,48195 | 4,22870 | 4,24920 | 4,27995 |
| | (H₂O) pur | Add-3 | Add-1 | Add-2 |
| g H₂O / m² | 179 | 169 | 170 | 171 |
| niedriger als nur H₂O (%) | 0,0 | 5,7 | 5,2 | 4,5 |

| | | | | |
|---|---|---|---|---|
| Add = Additiv | | | | |

Das Diagramm gemäß der angefügten Fig. 1 zeigt graphisch, dass mit der Reinigungszusammensetzung A gemäß der Erfindung mehr Wasser aus dem Filz abtropfen kann als aus einem mit Add-1 oder Add-2 behandelten Filz. Ein mit der Zusammensetzung A behandelter Filz lässt erwarten, dass er mehr Wasser von dem nassen Papiergelege während des nächsten Durchlaufs durch den nachfolgenden Pressenspalt absorbieren kann.

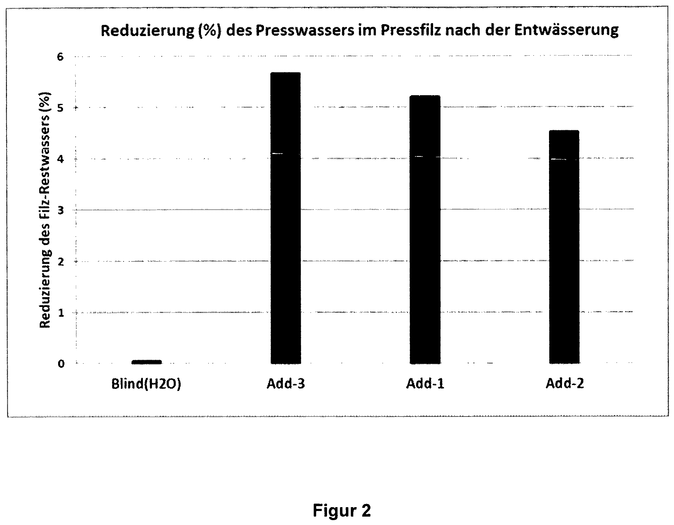

Das Diagramm gemäß der angefügten Fig.2 zeigt dieselben Daten in Form der prozentualen Reduktion der Wasserretention im Filz, verglichen mit einem nur mit Wasser behandelten Filz oder einem mit Add-1 oder Add-2 behandeltem Filz.

Eine bessere Entfernung von Wasser aus dem Pressenfilz bedeutet eine darauffolgend bessere Absorption von Wasser aus dem nassen Papiergelege. Das führt letztendlich dazu, dass in der Trockenpartie weniger Wasser herausgetrocknet werden muss. Das bedeutet wiederum eine erhebliche Energieeinsparung und eine potentiell höhere Produktionsgeschwindigkeit.

### 2. Behandlung von Pressenfilz unter Verwendung einer Zusammensetzung OLC-1 als Ersatz für einen auf aliphatischem Kohlenwasserstoff basierenden Reiniger gemäß EP 1 556 547 B1

Eine große Papiermaschine für die Herstellung von Verpackungskarton wurde aufgebaut. Vor Produktionsbeginn wurde ein System installiert, um die Pressenfilze einer Schockwäsche mit sowohl einem sauren Offline-Filzreiniger als auch einem alkalischen Offline-Filzreiniger unterziehen zu können.

An allen drei Pressenfilzen wurde ein kontinuierliches Online-Filzreinigungssystem installiert. Dazu wurden Hochdruckdosierpumpen verwendet, um eine wasserfreie Reinigungszusammensetzung aus der EP 1 556 547 B1, umfassend aliphatische Kohlenwasserstoffe, Tenside und Orangen Terpen in das Wasser der oszillierenden Hochdruck-Filzreinigungssprühanlagen einzubringen. Die Hochdruckspritzrohre waren direkt vor dem Punkt angeordnet, wo die nassen Filze über eine Vakuumbox laufen.

Die Menge an verwendeter Reinigungszusammensetzung, betrug jeweils 5 ml pro Minute pro Meter der Breite der Pressenfilze. Der Online-Filzreiniger gemäß der EP 1 556 547 B1 war für etwa 7 Jahre kontinuierlich im Einsatz. Während dieser Zeit musste weder das saure noch das alkalische Offline-Reinigungssystem für eine Schockwäsche eingesetzt werden.

Dieses Produkt wurde dann durch die erfindungsgemäße Zusammensetzung A ersetzt. Die Einsatzmenge war identisch, nämlich 5 ml/min/m Filzbreite. Es wurde dieselbe Anlage wie vorher verwendet. Das Dosiersystem, die Pumpen, etc. wurden jedoch vor der Änderung der Produkte durchgespült.

### Ergebnis:

Die neue Reinigungszusammensetzung OLC-1 wurde fast ein Jahr lang getestet. In diesem Zeitraum war nie eine Schockwäsche zur Filzreinigung erforderlich.

Überraschenderweise stellte sich eine fortschreitende Zunahme der Papierproduktion ein. Eine maximale Papierproduktionsmenge ist üblicherweise von der Trockenfähigkeit abhängig und da die Trockenfähigkeit abhängig von der Menge an aus dem nassen Papier zu trocknenden Wasser ist, kann angenommen werden, dass die Leistung der Pressenpartie mit der neuen Reinigungszusammensetzung A im Vergleich zum früheren Produkt gemäß der EP 1 556 547 B1 wenigstens gleich gut, wenn nicht besser ist.

Ein großer Vorteil bei diesem Ergebnis ist auch, dass die Verwendung aliphatischer Kohlenwasserstoffe vermeidbar ist. Die aliphatischen Kohlenwasserstoffe konnten durch ein Produkt ersetzt werden, das einen deutlich niedrigeren Anteil an Lösungsmittel hat und dieses Lösungsmittel biologisch abbaubar und im Wesentlichen nicht-toxisch ist. Der Vorteil konnte ohne Nachteile für die Papiermaschinenleistung eingestellt werden.

### Prozesswasserbehandlung

Eine große Papiermaschine zur Herstellung von Verpackungskarton (Decken- und Wellpapier zur Herstellung von Faltschachteln) wurde mit einem auf Natriumhypochlorit/Ammoniumsalz basierenden oxidierenden Biozidsystem (ein Chloramin) gegen biologische Ablagerungsprobleme behandelt. Diese Behandlung beseitigte jedoch keine störenden Ablagerungen aus "Stickies" etc., welche sich auf Unterwasser befindlichen Oberflächen in dem kurzen Kreislauf und auf Formationssieben und den Führungswalzen bilden. Die Maschine wurde zur Reinigung solcher Teile von Kontaminierungen organischen Materials abgeschaltet.

Die Analyse der Kontaminierungen zeigte, dass die Probleme nicht auf mikrobiologischem Ursprung, wie Schleim beruhten, sondern zumeist auf klebrigen Substanzen aus dem Altpapierrohstoff.

Zur Bekämpfung dieses Problems wurde später, zusätzlich zu der standardmäßigen Schockdosierung eines oxidierenden Biozidsystems, eine zweite Behandlung mit einem kontinuierlich zudosierten Online-Reinigungszusatz gestartet. Bei diesem Reinigungszusatz handelte es sich um die wasserfreie Reinigungszusammensetzung gemäß der EP 1 556 547 B1, umfassend aliphatische Kohlenwasserstoffe, Tenside und Orangen Terpen. Diese Reinigungszusammensetzung wurde in einer Menge von 400 g Reinigungszusammensetzung pro Tonne produziertem Papier kontinuierlich in den kurzen Kreislauf an einer Stelle vor der Mischpumpe zudosiert, wo der neue Dickstoff dem kurzen Kreislauf zugegeben wird.

Dieser Online-Reiniger wurde etwa 4 Jahre lang auf kontinuierlicher Basis in Kombination mit dem oxidierenden Biozid verwendet.

Zum Vergleich wurde die neue auf Wasser basierende Online-Reinigungszusammensetzung OLC-1 gemäß der vorliegenden Erfindung eingesetzt, welche ein biologisch abbaubares Lösungsmittel, Tenside und einen Komplexbildner umfasst. Die eingesetzte Menge war dieselbe, nämlich 400 g Additiv pro Tonne hergestelltem Papier. Die Anlage, umfassend Dosierpumpen, Dosierleitungen, Injektionsdüsen etc., welche zum Einbringen der neuen Reinigungszusammensetzung verwendet wurden, waren dieselben wie für das frühere Produkt. Das Dosiersystem, die Pumpen etc. wurden vor der Änderung der Produkte durchgespült.

### Ergebnis:

Mit der neuen Online-Reinigungszusammensetzung OLC-1 war es über ein Jahr nicht nötig, die Maschine ungeplant abzuschalten, um beispielsweise "Stickies" von den Formationssieben oder Führungswalzen zu entfernen.

Gleichzeitig wurde während dieser Zeit auch eine Zunahme der durchschnittlichen Papierproduktion beobachtet. Da eine maximale Papierproduktionsmenge zumindest teilweise von weniger Produktionsunterbrechungen und dem Vermeiden unnötiger Abschaltungen, wie für ungeplante Reinigungen, abhängig ist, kann angenommen werden, dass die Leistung der neuen Online-Reinigungszusammensetzung OLC-1 in dem kurzen Kreislauf wenigstens so gut, wenn nicht besser im Vergleich zum ursprünglichen Produkt ist.

Der weitere Vorteil ist wieder, dass die Verwendung von aliphatischen Kohlenwasserstoff in der Reinigungszusammensetzung durch ein Produkt vermieden und ersetzt werden kann, das überhaupt deutlich weniger Mengen an Lösungsmittel enthält und das ersetzende Lösungsmittel biologisch abbaubar und im Wesentlichen nicht-toxisch ist. Dieser Vorteil konnte ohne Nachteil für die Leistung der Papiermaschine erreicht werden.

### 4. Verwendung eines oxidierenden Monochloraminbiozids, hergestellt aus Natriumhypochlorit und Ammoniumchlorid, zusammen mit einem auf Wasser basierenden Online-Reiniger OLC-3, umfassend Tenside und einen biologisch abbaubaren Komplexbildner.

Eine Papiermaschine wurde zur Herstellung von Etikettenpapier, Offset-Druckpapier und Trennpapier verwendet. Der verwendete Faserstoff war eine chemisch gebleichte Pulpe der Pulpenanlage der Papierfabrik. Die Papierformulierung enthielt auch Carbonatfüllstoffe und verschiedene Arten Leim, einschließlich Naturharzleim und AKD (Alkylketendimer-Wachsemulsion). Die Papiermaschine wurde mit einem oxidierenden Biozidsystem basierend auf Natriumhypochlorit/Ammoniumbromid (Bromid-aktiviertes Chloramin ("BAC") gegen biologische Ablagerungsprobleme behandelt. Diese Behandlung konnte jedoch störende Ablagerungen von Harzen, etc., welche sich auf unter Wasser befindlichen Oberflächen im kurzen Kreislauf, auf den Formationssieben und den Führungswalzen und den Pressenfilzen bilden, nicht beseitigen. Solche Ablagerungen werden oft mit Füllstoffen verbunden. Abschaltungen der Maschine wurden vorgenommen, um solche Teile von Kontaminierung mit organischen und anorganischen Materialien zu reinigen. Eine Analyse der Kontaminierungen zeigte, dass die Probleme nicht auf mikrobiologischem Ursprung, wie Schleim, beruhten, sondern es sich hauptsächlich um klebrige Substanzen aus den Papierherstellungskomponenten zusammen mit anorganischen Füllstoffkomponenten handelt.

Zusätzlich zu der standardmäßigen Schockdosierung des oxidierenden Biozidsystems, wurde eine zweite Behandlung mit einem kontinuierlich zudosierten Online-Reiniger begonnen. Dieser Online-Reiniger war eine wasserfreie Reinigungszusammensetzung gemäß der EP 1 556 547 B1, umfassend einen aliphatischen Kohlenwasserstoff, Tenside und Orangen Terpen. Diese Reinigungszusammensetzung wurde in einer Menge von etwa 400 g Reinigungszusammensetzung pro Tonne hergestelltem Papier zudosiert. Dabei wurden etwa 2/3 dieser Menge kontinuierlich dem Wasser in die Hochdruck-Reinigungsspritzrohre für die Pressenfilze zudosiert und der Rest an einem Punkt des Stromes des Verdünnungswassers für den Stoffauflauf, direkt vor dem Verdünnungswasserdrucksieb eingespeist.

Die Kombination des Bromid-aktivierten Chloramin und des auf aliphatischem Kohlenwasserstoff basierenden Online-Reiniger wurde über einen langen Zeitraum auf kontinuierlicher Basis verwendet.

Für den durchgeführten Vergleich wurde das oxidierende Biozidsystem basierend auf Bromid-aktiviertem Chloramin durch Monochloramin, hergestellt aus Natriumhypochlorit und Ammoniumchlorid ersetzt und zusätzlich die auf Wasser basierende, lösungsmittelfreie Zusammensetzung (OLC-3), basierend auf Tensiden und einem biologisch abbaubaren Komplexbildner verwendet. Die Dosiereinrichtung für das Monochloramin besteht aus einer Einrichtung, zur Vorverdünnung der zwei Vorläufermaterialien und dann deren Vermischung online in einem definierten Mischverhältnis. Dann wurde das resultierende Monochloramin direkt in die Papiermaschine zudosiert.

Die auf Wasser basierende Zusammensetzung OLC-3 dieser Erfindung wurde durch die gleichen Pumpen und Rohre wie die früheren Reiniger online zudosiert, jedoch wurde das Dosiersystem, die Pumpen etc. vorher mit einem Lösungsmittel durchgespült.

Die Natriumhypochloritlösung (etwa 12% Gew./Vol. als Chlor) und die Ammoniumchloridlösung (20 % Gew./Gew. in Wasser) wurden jeweils separat voneinander um etwa das 20-fache des Volumens mit industriellem Frischwasser verdünnt und dann in einem Mischungsverhältnis von 1,6 Volumenteilen an Natriumhypochloritbleiche zu einem Volumenteil ursprünglicher Ammoniumchloridlösung vermischt. Die Konzentration an Ammoniumchlorid in der so hergestellten Lösung beträgt ungefähr 0,25 bis 0,30% Gew./Vol. Diese Konzentration hängt von der genauen Vorverdünnung der Vorläufermaterialien ab, insbesondere der Konzentration der Hypochloritbleiche. Die Monochloraminlösung wurde an den gleichen Dosierungspunkten in den Siebwasser I-Kreislauf wie das frühere Biozid zudosiert.

Die Reinigungszusammensetzung gemäß der EP 1 556 547 wurde durch die neue Reinigungszusammensetzung OLC-3 ersetzt, welche eine wässrige Lösung von zwei Arten von Detergentien plus einen Komplexbildner umfasst, wobei der Komplexbildner biologisch abbaubar und nicht-toxisch ist.

### Ergebnis:

Mit der Kombination aus dem neuen Monochloramin-Biozid und dem neuen Online-Reiniger OLC-3 über mehrere Monate, konnte eine deutliche Verbesserung bei der Reinigung der Pressenfilze im Vergleich zu dem früheren Behandlungsprogramm festgestellt werden. Das Erfordernis der periodischen Schockwäschen der Filze, welche einen kurzen Produktionsstopp notwendig gemacht hätten, war reduziert.

Darüber hinaus waren die sich unter Wasser befindlichen Oberflächen, die Rohrleitungen für das Verdünnungswasser für den Stoffauflauf und die Verdünnungswasser-Drucksortierer sauberer als mit dem früheren System. Diese Reinheit wurde während geplanter Abschaltungen durch Inspektion beurteilt. Die Häufigkeit von Papierdefekten war reduziert.

Da bei dieser besonderen Behandlungskombination keinerlei Lösungsmittel vorhanden sind, bedeutet das, dass keine flüchtigen organischen Kohlenstoffe (VOC) in die Umwelt freigesetzt werden, was einen großen Vorteil für die Umwelt darstellt.

### 5. Verwendung des oxidierenden Biozids Monochloramin, hergestellt aus Natriumhypochlorit und Ammoniumchlorid, zusammen mit dem auf Wasser basierenden Online-Reiniger OLC-1.

Eine Papiermaschine wurde zur Herstellung eines Sortiments von Papierqualitäten, einschließlich Buchdruckpapier, eingesetzt. Der verwendete Faserstoff war wesentlich mit chemischer Pulpe gebleicht. Die Papierformulierung enthielt auch Calciumcarbonat als Füllstoff sowie verschiedene Arten von Leim, einschließlich AKD (Alkylketendimer).

Die Papiermaschine war mit dem oxidierenden Monochloramin, hergestellt aus Natriumhypochlorit und Ammoniumchlorid, gegen mikrobielle Ablagerungsprobleme zusammen mit dem Online Reiniger gemäß EP 1 556 547 B1 behandelt worden. Diese Behandlung konnte jedoch störende Ablagerungen, die sich auf unter Wasser befindlichen Oberflächen im kurzen Kreislauf und auf den Pressenfilzen bilden, nicht in zufriedenstellender Weise reduzieren.

Dabei wurde das Monochloramin (MCA) zunächst kontinuierlich in den kurzen Kreislauf der Papiermaschine (Siebwasser I) eingespeist, aber auch dem gesamten verwendeten Frischwasser zugegeben, da dieses Frischwasser für bestimmte Reinigungsspritzrohren, z.B. für Filze in der Pressenpartie verwendet wird.

Der Online-Reiniger gemäß der EP 1 556 547 B1, basierend auf aliphatischem Kohlenwasserstoff, wurde zunächst kontinuierlich dem transversalen (Dünnstoff)Verteiler (Querstromverteiler) vor dem Stoffauflauf zugegeben und dann einem zusätzlichen Dosierpunkt in Wasser, das als Reinigungsspritz für die Saugwalze am Ende des Formationssiebtisches verwendet wurde. Für beide Anwendungspunkte wurde dieses Reinigungsmittel durch die die neue Reinigungszusammensetzung OLC-1 gemäß der vorliegenden Erfindung ersetzt.

Die Kombination des neuen Monochloramins mit der neuen Reinigungszusammensetzung OLC-1 wurde über einen Zeitraum von mehreren Monaten getestet. Im Vergleich zu einer Kombination mit dem Reiniger gemäß der EP 1 556 547 B1 zeigte sich eine deutliche Verbesserung bei der Reinigung der sich unter Wasser befindenden Oberflächen im kurzen Kreislauf. Der Zeitraum bis zu einem notwendigen Auskochen hat sich im Test verlängert.

Darüber hinaus zeigten sich die unter Wasser befindlichen Oberflächen der Stoffauflauf-Rohrleitungen und die der Drucksortierer sauberer als mit dem früheren System. Auch war die Häufigkeit von Papierfehlern geringer.

Der Wechsel zu dem neuen Reiniger OLC-1 resultierte in einer Reduktion von Papierbahnrissen, welche durch chemische Ablagerungen verursacht werden. Am Ende der ersten vollständigen Laufzeit mit der neuen Zusammensetzung A von etwa 4 Wochen, konnte festgestellt werden, dass am nassen Ende und in der Pressenpartie die Häufigkeit von auftretenden Abrissen von im Mittel 4 pro Tag auf im Mittel 3 pro Tag gesunken ist. Das bedeutet eine wertvolle Steigerung der Produktions zeit.

### 6. Verwendung der Zusammensetzung OLC-3 zum Reinigen und Konditionieren der Pressenfilze in einer Altpapier verwendenden Papiermaschine

Mit einer großen modernen Papiermaschine wurde Verpackungspapier (Liner und Wellenstoff) aus recyceltem Altpapier hergestellt. Solches Verpackungspapier wird zum Verpacken von Lebensmitteln, z.B. in Faltschachteln, verwendet. Die Maschine ist zur Produktion von 60 Tonnen solchen Papiers pro Stunde ausgelegt.

Zu Beginn wurde ein System installiert, um die Pressenfilze während kurzer Produktionspausen offline einer Schockwäsche mit sauren oder alkalischen Reinigern zu unterziehen. Solche Systeme werden bei Verwendung von recyceltem Altpapier oft einmal pro Woche eingesetzt. Für die neue Maschine hat man das Reinigungsmittel auch kontinuierlich online zudosiert, um die Pressenfilze zu konditionieren und sauber zu halten.

Da eine Schockwäsche eine Produktionsunterbrechung von bis zu einer Stunde mit sich bringen kann, bedeutet das einen Produktionsverlust von 60 Tonnen.

Die ursprüngliche Reinigungszusammensetzung gemäß der EP 1 556 547 B1, umfassend aliphatische Kohlenwasserstoffe, Tenside und Orangen Terpene erwiesen sich im Online Einsatz derart wirkungsvoll, dass eine Offline-Reinigung mit sauren oder alkalischen Reinigern nicht mehr erforderlich war und deshalb nach einigen Jahren eingestellt wurde.

Aufgrund der Forderung der Industrie, mineralölfreies Papier zur Verpackung von Lebensmitteln zu verwenden, wurde die Reinigungszusammensetzung der EP 1 556 547 B1 durch das neue Reinigungsmittel OLC-3 ersetzt. Nach etwa 1 Jahr zeigte die Produktionsstatistik, dass der Wechsel zu dem neuen Reinigungsmittel OLC-3 gemäß der Erfindung keinen Leistungsverlust in der Pressenpartie bedeutet und keinen Verlust, was die Papierproduktion betrifft.

### 7. Multifunktionale auf Wasser basierende Zusammensetzung, umfassend Wasser, Tenside, ein Acetallösungsmittel und zwei unterschiedliche Komplexbildner (Gluconat und GLDA) (OLC-6) zur Online-Reinigung von Papiermaschinenteilen, einschließlich Pressenfilzen

Im Laborversuch wurden verschiedene, neu entwickelte Zusammensetzungen auf ihre Wirksamkeit bei der Reinigung von benutzten und demzufolge verschmutzten Pressenfilzen verglichen.

Dieser benutzte Pressenfilz war der Papiermaschine während der Routinewartung entnommen worden. Der Pressenfilz war etwa 3 Wochen in Benutzung und stammte aus einer Papiermaschine, mit welcher Verpackungspapier aus 100 % Altpapier hergestellt wird.

Ein derartig verwendeter Pressenfilz wird üblicherweise mit Substanzen, wie Harzen, Klebstoffen, Leimrückständen, mineralischen Ablagerungen, etc. verunreinigt, welche a) die Absorptionsfähigkeit und Porosität des Filzes reduzieren und b) den Filz hydrophober machen, sodass Wasser abgewiesen wird und die Fähigkeit des Filzes Wasser zu absorbieren reduziert.

Das Testverfahren zur Überprüfung der Reinigungswirkung basiert auf
a) dem Gewichtsverlust eines Stückes Pressenfilzes nach der Reinigung, was als Maß für die Reinigungswirkung angenommen wird und
b) die Geschwindigkeit, in welcher ein auf dem Pressenfilz vorsichtig platzierter Wassertropfen vollständig aufgesaugt ist, wobei eine Zeit von unter einer Sekunde als "gut" angenommen wird.

### Gewichtsverlust des Pressenfilzes bei der Reinigung

- Mehrere Scheiben von 40 mm Durchmesser werden aus dem Pressenfilz herausgeschnitten und einzeln markiert.
- Die Scheiben werden in einem warmen Trockenofen konditioniert und sofort auf einer 4-stelligen Analysewaage entsprechend dem Trockengewicht gewogen.
- Eine Scheibe wird in einen 100 ml einer unverdünnten Reinigungszusammensetzung und einen Rührfisch enthaltenden Becher gegeben und gerührt.
- Wasser wird zur Blindbestimmung verwendet.
- Nach 30 Minuten wird die Scheibe entnommen, in eine vorgeschriebene Menge warmen Wassers in einem Becher gegeben und für eine vorbestimmte Zeit vermischt.
- Die Scheibe wird in einen auf einer Saugflasche angeordneten 400 mm Buchner-Trichter auf einer an eine Wasserstrahlpumpe angeschlossenen Saugflasche gegeben.
- 2000ml warmes Wasser werden durch die Filzscheibe unter Vakuum gespült.
- Die Scheibe wird im Trockenofen bis zu einem konstanten Gewicht getrocknet und das Endgewicht verzeichnet.
- Der Verlust an Gewicht durch die Reinigung wird verglichen.
- Für jede geprüfte Reinigungszusammensetzung wird die Prozedur doppelt durchgeführt, wobei sich die Doppelergebnisse innerhalb bestimmter Toleranzen liegen sollen.

### Modifiziertes Reinigungsverfahren

- Für die Testläufe OLC-4 und OLC-5 wurde ein modifiziertes Verfahren verwendet, wobei für die erste Reinigungszusammensetzung eine 30-minütige Kontaktzeit, einschließlich dem Spülschritt verwendet und anschließend eine Wiederholung des Reinigungsschrittes mit einem zweiten Reinigungsmittel, ebenfalls 30 Minuten, durchgeführt. Diese Methodik simuliert den gleichzeitigen Einsatz von zwei Reinigungsmitteln.

### Verbesserung der Penetrationszeit für Wassertropfen nach der Reinigung

- Ein Wassertropfen wird aus seiner Pipette vorsichtig auf einer gereinigten Pressenfilzoberfläche platziert.
- Mithilfe einer Stoppuhr wird die Zeit gemessen, bis der Tropfen von dem Filz vollständig aufgenommen ist.
- Die Messung wird wenigstens zweimal durchgeführt.
- Die Messung wird auch auf dem ungereinigten Filz durchgeführt.
- Eine längere Zeit zeigt an, dass der Filz hydrophober ist und daher im Gebrauch weniger effizient wäre.

Es wurden die folgenden Online-Reinigungszusammensetzungen geprüft:
- OLC-1:: Hierbei handelt es sich um einen neutralen, auf Wasser basierenden Reiniger, umfassend Wasser, Tenside, Butylal und GLDA
- OLC-2:: Hierbei handelt es sich um einen sauren, auf Wasser basierenden Reiniger, umfassend Wasser, Tenside, Butylal, Glycolsäure und GLDA
- OLC-3:: Hierbei handelt es sich um den auf Wasser basierenden Reiniger, umfassend Wasser, Natriumgluconat und Tenside
- OLC-4 = OLC-2: plus OLC-3: Zuerst wurde die Zusammensetzung OLC-2 und sofort danach die Zusammensetzung OLC-3 verwendet
- OLC-5 = OLC-3: plus OLC-2: Zuerst wurde die Zusammensetzung OLC-3 und sofort danach die Zusammensetzung OLC-2 verwendet
- OLC-6 = C:: Hierbei handelt es sich im Wesentlichen eine Kombination der Komponentenaus OLC-1 und OLC-3

### Ergebnisse:

| Verwendete Zusammensetzung | Filz-Gewichtsverlust nach Reinigung (%) | Tropfen-Penetrationszeit (DPT) (Sek.) |
|---|---|---|
| OLC-1 | 0,5 | 0,1 |
| OLC-2 | 2 | 0,1 |
| OLC-3 | 1,8 | 0,1 |
| OLC-4 | 3,3 | 0,1 |
| OLC-5 | 2,6 | 0,1 |
| OLC-6 | 2,4 | 0,5 |
| Blindprobe | 0,2 | 100 |

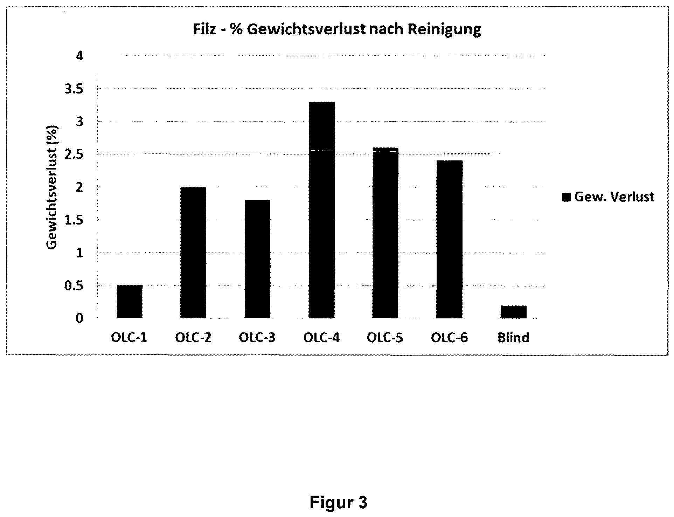

Das Ergebnis ist grafisch in der Fig. 3 wiedergegeben.

Demnach zeigt die Multikomponentenmischung OLC-6 eine deutliche Verbesserung bei der Entfernung von Verunreinigungen der getesteten, verschmutzten Filzprobe, im Vergleich zu den einzeln verwendeten Zusammensetzungen OLC-2 und OLC-3.

Die für die Reinigungszusammensetzungen OLC-4 und OLC-5 verwendeten Prozeduren können nicht normal mit OLC-6 verglichen werden, da es sich bei diesen um ein Doppelreinigungsverfahren handelt, welches wenigstens die zweifache Reinigungszeit und etwa die doppelte Menge an allgemeinen Reinigungskomponenten insgesamt erfordert.

Des Weiteren zeigt der Test, dass auch die saure Zusammensetzung OLC-2, welche eine saure Version von OLC-1 ist, einen Reinigungsvorteil für diesen besonderen, verschmutzten Filz ergibt.

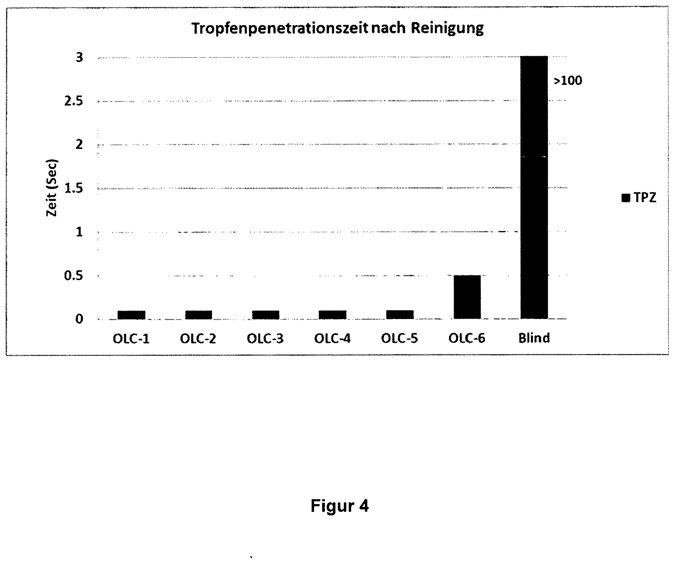

Aus der Fig. 4 sind die Ergebnisse für die Tropfenpenetrationszeit nach der Reinigung grafisch dargestellt.

Obwohl die Mischung OLC-6 im Wassertropfenpenetrationstest geringfügig schlechter als alle anderen war, kann eine Zeit von 0,5 Sekunden nichtsdestotrotz als sehr gut angenommen werden.

Die neuen Online-Reinigerzusammensetzungen der vorliegenden Erfindung basieren auf Wasser (> 40 Gew.%) in Form einer Mikroemulsion oder in Lösung. Demnach ist der Anteil der Aktivsubstanzen deutlich niedriger als früher mit im Vergleich zum Stand der Technik gleichen oder sogar besseren Reinigungsergebnissen.

Die Vermeidung von aliphatischen Kohlenwasserstoffen bedeutet einen großen Vorteil für die Umwelt. Die Komponenten sind insgesamt biologisch abbaubar und nicht toxisch.

Die neuen Online-Reinigerzusammensetzungen gemäß der Erfindung erfüllen damit vollständig die Anforderungen der Lebensmittel-Verpackungsindustrie.

## Patentansprüche

1. Online-Reiniger für die Beseitigung, Vermeidung oder wenigstens Verminderung von Ablagerungen in wasserführenden und/oder mit Wasser in Kontakt stehenden, papierproduzierenden Anlagen, welcher frei von aliphatischen Kohlenwasserstoff-Lösungsmitteln ist und aus wenigstens einem hydrophoben organischen Lösungsmittel aus der Gruppe der Acetale sowie aus wenigstens einem Tensid, und/oder wenigstens einem Chelatbildner sowie > 40% Wasser besteht.

2. Online-Reiniger gemäß Anspruch 1, wobei als Lösungsmittel Acetale, mit einem hohen Siedepunkt (> 160°C) und einem hohen Flammpunkt (> 60°C) enthalten sind.

3. Online-Reiniger gemäß Anspruch 1 oder 2, wobei das Acetal aus 2-Ethylhexylal und/oder Dibutoxymethan ausgewählt ist.

4. Online-Reiniger gemäß einem der Ansprüche 1 bis 3, wobei das wenigstens eine Tensid unter den Alkylbenzolsulfonaten, Alkoholaminsalzen, Alkylsulfonsuccinaten und/oder aliphatischen Alkoholalkoxylaten ausgewählt ist.

5. Online-Reiniger gemäß Anspruch 4, wobei zwei Tenside enthalten sind, wovon eines ein anionisches, benetzendes Tensid und das andere ein nichtionisches Tensid ist.

6. Online-Reiniger gemäß einem jeden der Ansprüche 1 bis 5, wobei ein- und/oder zweiarmige bis vierarmige Komplexbildner enthalten sind.

7. Online-Reiniger gemäß Anspruch 1, umfassend Natriumgluconat, Natrium-2-ethyloxylsulfat und Alkylpolyethylenglycolether (C9-C16).

8. Online-Reiniger gemäß Anspruch 1, umfassend Dodecylbenzolsulfonsäure, C13-C15-Alkoholalkoxylat, Dibutoxymethan und N,N-Bis(carboxylatomethyl)-L-glutamat-tetranatriumsalz.

9. Online-Reiniger zur Beseitigung, Vermeidung oder wenigstens Verminderung von Ablagerungen in wasserführenden und/oder mit Wasser in Kontakt stehenden Anlagen gemäß Anspruch 7, des Weiteren umfassend ein Produkt gemäß Anspruch 8.

10. Online-Reiniger nach einem der vorhergehenden Ansprüche 1 bis 9, **dadurch gekennzeichnet, dass** er als Mikroemulsion vorliegt.

11. Verfahren zur Beseitigung, Vermeidung oder wenigstens Verminderung von Ablagerungen in wasserführenden und/oder mit Wasser in Kontakt stehenden, papierproduzierenden Anlagen, insbesondere Industrieanlagen, wobei dem Prozesswasser vor oder in den Anlagen an ausgewählten Abschnitten ein Online-Reiniger gemäß einem der Ansprüche 1 bis 10 in einer basierend auf dem Trockengewicht der in dem Wasservolumen der Anlage vorliegenden Feststoffe wirksamen Menge zugegeben wird.

12. Verfahren nach Anspruch 11, **dadurch gekennzeichnet, dass** der Online-Reiniger in einer Gesamtmenge von 50 bis 1.000 ppm (g/Tonne) aufgegeben wird.

13. Verfahren nach Anspruch 11 und 12, **dadurch gekennzeichnet, dass** der Online-Reiniger auf die Formationssiebe, Aufnahmefilze, Pressenfilze, Saugwalzen, Trockensiebe, Leitwalzen oder Trockenzylinder der Trockenpartien, dem Siebwasserkreislauf in der Pressenpartie, den Kreisläufen und/oder Teilen einer Pulpe-Entwässerungsmaschine einer Papier- oder Pappemaschine aufgegeben wird.

14. Verfahren nach einem der Ansprüche 11 bis 13, **dadurch gekennzeichnet, dass** der Online-Reiniger direkt oder indirekt aufgegeben wird.

15. Verfahren nach den Ansprüchen 11 bis 14, **dadurch gekennzeichnet, dass** dem Prozesswasser zusätzlich ein stabilisiertes Halogen direkt oder indirekt zugegeben wird.

16. Verfahren gemäß Anspruch 15, **dadurch gekennzeichnet, dass** das stabilisierte Halogen ein von
• Hypochlorit und Ammoniumchlorid hergeleitetes Monochloramin,
• einer Chlorquelle und Ammoniumsulfat hergeleitetes Monochloramin,
• Hypochlorit und Ammoniumcarbamat hergeleitetes Monochloramin,
• einer Chlorquelle und Ammoniak hergeleitetes Monochloramin,
• Hypochlorit und Ammoniumbromid hergeleitetes Bromaktiviertes Monochloramin (BAC) ist, oder
• Brom-chlordimethylhydantoin (BCDMH)
• Aktives Brom aus Bromchlorid
• Natrium-Dichlorisocyanurat-dihydrat oder
• Trichlorisocyanursäure ist.

17. Verfahren nach Anspruch 15 und 16, **dadurch gekennzeichnet, dass** das stabilisierte Halogen als Einmaldosis oder kontinuierlich als Lösung in einer Menge von 10 bis 10.000 ppm, ausgedrückt als handelsübliche 13% Cl2 (Gew./Vol.) Natriumhypochloritbleiche, basierend auf dem Trockengewicht von Feststoffen zugegeben wird.

## Claims

1. Online cleaner for the elimination, avoidance, or at least reduction of deposits in water-bearing and/or water-contacting paper-producing plants, which is free from aliphatic hydrocarbon solvents and consists of at least one hydrophobic organic solvent from the group of acetals as well as of at least one surfactant and/or at least one chelating agent and > 40% water.

2. Online cleaner according to claim 1, whereby acetals of high boiling point (> 160°C) and high flash point (> 60°C) are contained as solvents.

3. Online cleaner according to claim 1 or 2, whereby the acetal is selected from 2-ethylhexylal and/or dibutoxymethane.

4. Online cleaner according to one of claims 1 to 3, whereby the at least one surfactant is selected from alkylbenzenesulfonates, alcoholamine salts, alkylsulfonesuccinates, and/or aliphatic alcohol alkoxylates.

5. Online cleaner according to claim 4, whereby two surfactants are included, one of which is an anionic wetting surfactant and the other of which is a non-ionic surfactant.

6. Online cleaner according to any one of claims 1 to 5, whereby one- and/or two-arm to four-arm complexing agents are included.

7. Online cleaner according to claim 1, comprising sodium gluconate, sodium 2-ethyloxyl sulfate, and alkyl polyethylene glycol ether (C9-C16).

8. Online cleaner according to claim 1, comprising dodecylbenzenesulfonic acid, C13-C15 alcohol alkoxylate, dibutoxymethane, and N,N-bis(carboxylatomethyl)-L-glutamate tetrasodium salt.

9. Online cleaner for the elimination, avoidance, or at least reduction of deposits in water-bearing and/or water-contacting plants according to claim 7, further comprising a product according to claim 8.

10. Online cleaner according to one of the preceding claims 1 to 9, **characterized in that** it is in the form of a microemulsion.

11. Method for the elimination, avoidance, or at least reduction of deposits in water-bearing and/or water-contacting paper-producing plants, in particular industrial plants, whereby an online cleaner according to one of claims 1 to 10 is added to the process water in front of or in the plants at selected sections in an effective amount based on the dry weight of the solids present in the water volume of the plant.

12. Method according to claim 11, **characterized in that** the online cleaner is applied in a total amount of 50 to 1,000 ppm (g/ton).

13. Method according to claims 11 and 12, **characterized in that** the online cleaner is applied to the forming fabrics, pickup felts, press felts, suction rolls, drying fabrics, guide rolls, or drying cylinders of the drying sections, the white water circuit in the press section, the circuits and/or parts of a pulp dewatering machine of a paper or board machine.

14. Method according to one of claims 11 to 13, **characterized in that** the online cleaner is applied directly or indirectly.

15. Method according to claims 11 to 14, **characterized in that** a stabilized halogen is additionally added directly or indirectly to the process water.

16. Method according to claim 15, **characterized in that** the stabilized halogen is:
• a mono-chloramine derived·from hypochlorite and ammonium chloride;
• a mono-chloramine derived from a chlorine source and ammonium sulfate;
• a mono-chloramine derived from hypochlorite and ammonium carbamate;
• a mono-chloramine derived from a chlorine source and ammonia;
• a bromine-activated mono-chloramine (BAC) derived from hypochlorite and ammonium bromide; or
• bromo-chlordimethylhydantoin (BCDMH);
• active bromine from bromine chloride;
• sodium dichloroisocyanurate dihydrate; or
• trichloroisocyanuric acid.

17. Method according to claim 15 and 16, **characterized in that** the stabilized halogen is added as a single dose or continuously as a solution in an amount of 10 to 10,000 ppm expressed as commercial 13% Cl2 (w/v) sodium hypochlorite bleach based on dry weight of solids.

## Revendications

1. Nettoyant en ligne pour éliminer, éviter ou au moins réduire les dépôts dans des installations de production de papier contenant de l'eau et/ou entrant en contact avec de l'eau, qui est exempt de solvants d'hydrocarbure aliphatiques et qui consiste en au moins un solvant organique hydrophobe parmi le groupe des acétals et en au moins un agent tensioactif et/ou en au moins un agent chélateur et en > 40 % d'eau.

2. Nettoyant en ligne selon la revendication 1, dans lequel les acétals ayant un point d'ébullition élevé (> 160°C) et un point d'éclair élevé (> 60°C) sont contenus comme solvants.

3. Nettoyant en ligne selon la revendication 1 ou 2, dans lequel l'acétal est choisi parmi le 2-éthylhexylal et/ou le dibutoxyméthane.

4. Nettoyant en ligne selon l'une des revendications 1 à 3, dans lequel ledit au moins un agent tensioactif est choisi parmi les sulfonates d'alkylbenzène, les sels d'amine alcoolisé, les sulfonsuccinates d'alkyle et/ou les alcoxylates d'alcool aliphatique.

5. Nettoyant en ligne selon la revendication 4, contenant deux agents tensioactifs dont l'un est un agent tensioactif mouillant anionique et l'autre est un agent tensioactif non ionique.

6. Nettoyant en ligne selon l'une des revendications 1 à 5, contenant des agents complexants à un et/ou deux à quatre bras.

7. Nettoyant en ligne selon la revendication 1, contenant du gluconate de sodium, du sulfate de 2-éthyloxyle de sodium et de l'éther d'alkyle polyéthylène glycol (C9-C16).

8. Nettoyant en ligne selon la revendication 1, contenant de l'acide dodécylbenzènesulfonique, un alcoxylate d'alcool en C13-C15, du dibutoxyméthane et du sel tétrasodique de N,N-bis(carboxylatométhyl)-L-glutamate.

9. Nettoyant en ligne pour éliminer, éviter ou au moins réduire les dépôts dans des installations contenant de l'eau et/ou entrant en contact avec de l'eau selon la revendication 7, contenant en outre un produit selon la revendication 8.

10. Nettoyant en ligne selon l'une des revendications précédentes 1 à 9, **caractérisé en ce qu'**il se présente sous forme de microémulsion.

11. Procédé pour éliminer, éviter ou au moins réduire les dépôts dans des installations de production de papier contenant de l'eau et/ou entrant en contact avec de l'eau, en particulier dans des installations industrielles, dans lequel un nettoyant en ligne selon l'une des revendications 1 à 10 est ajouté à l'eau de traitement, en amont ou dans les installations à des sections sélectionnées, en une quantité efficace sur la base du poids sec des solides présents dans le volume d'eau de l'installation.

12. Procédé selon la revendication 11, **caractérisé en ce que** le nettoyant en ligne est ajouté en une quantité totale de 50 à 1 000 ppm (g/tonne).

13. Procédé selon la revendication 11 et 12, **caractérisé en ce que** le nettoyant en ligne est ajouté sur les toiles de formation, les feutres de ramassage, les feutres de presse, les rouleaux d'aspiration, les toiles de séchage, les rouleaux de guidage ou les cylindres de séchage des sections de séchage, au circuit d'eau blanche dans la section de presse, aux circuits et/ou aux parties d'une machine de déshydratation de la pulpe d'une machine à papier ou à carton.

14. Procédé selon l'une des revendications 11 à 13, **caractérisé en ce que** le nettoyant en ligne est alimenté directement ou indirectement.

15. Procédé selon les revendications 11 à 14, **caractérisé en ce qu'**un halogène stabilisé est en outre ajouté directement ou indirectement à l'eau de traitement.

16. Procédé selon la revendication 15, **caractérisé en ce que** l'halogène stabilisé est l'un des suivants :
- monochloramine dérivée de l'hypochlorite et du chlorure d'ammonium,
- monochloramine dérivée d'une source de chlore et du sulfate d'ammonium,
- monochloramine dérivée de l'hypochlorite et du carbamate d'ammonium,
- monochloramine dérivée d'une source de chlore et de l'ammoniac,
- monochloramine activée par le brome (BAC), dérivée de l'hypochlorite et du bromure d'ammonium, ou
- bromo-chloro-diméthylhydantoïne (BCDMH)
- brome actif dérivé du chlorure de brome
- dichloroisocyanurate de sodium dihydraté, ou
- acide trichloroisocyanurique.

17. Procédé selon la revendication 15 et 16, **caractérisé en ce que** l'halogène stabilisé est ajouté sous forme de dose unique ou en continu sous forme de solution en une quantité de 10 à 10 000 ppm exprimée en tant qu'agent de blanchiment hypochlorite de sodium commercial en C12 (poids/volume) à 13 %, sur la base du poids sec des solides.
